(19) Europäisches Patentamt
European Patent Office
Office européen des brevets

(11) **EP 4 129 916 A1**

(12) **EUROPEAN PATENT APPLICATION**
published in accordance with Art. 153(4) EPC

(43) Date of publication:
**08.02.2023 Bulletin 2023/06**

(21) Application number: **21781133.0**

(22) Date of filing: **25.01.2021**

(51) International Patent Classification (IPC):
**C01F 17/36** (2020.01)     **H01B 1/06** (1968.09)
**H01M 10/0562** (2010.01)

(52) Cooperative Patent Classification (CPC):
**C01F 17/36; H01B 1/06; H01M 10/0562;**
Y02E 60/10

(86) International application number:
**PCT/JP2021/002509**

(87) International publication number:
**WO 2021/199617 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 JP 2020064755**

(71) Applicant: **Panasonic Intellectual Property Management Co., Ltd.**
**Osaka-shi, Osaka 540-6207 (JP)**

(72) Inventors:
- **KUBO Takashi**
  **Osaka-shi, Osaka 540-6207 (JP)**
- **MIYATAKE Kazufumi**
  **Osaka-shi, Osaka 540-6207 (JP)**
- **NISHIO Yusuke**
  **Osaka-shi, Osaka 540-6207 (JP)**
- **SAKAI Akihiro**
  **Osaka-shi, Osaka 540-6207 (JP)**

(74) Representative: **Eisenführ Speiser**
**Patentanwälte Rechtsanwälte PartGmbB**
**Postfach 31 02 60**
**80102 München (DE)**

(54) **METHOD FOR PRODUCING HALIDE**

(57)   The production method of the present disclosure includes a heat treatment step of heat-treating a material mixture containing $LiA$, $YB_3$, $GdC_3$, and $CaD_2$ in an inert gas atmosphere. A, B, C, and D are each independently at least one selected from the group consisting of F, Cl, Br, and I. In the heat treatment step, the material mixture is heat-treated at higher than or equal to 200°C and lower than or equal to 700°C.

# FIG. 1

START

HEAT TREATMENT STEP — S1000

END

**Description**

Technical Field

The present disclosure relates to a method for producing a halide.

Background Art

PTL 1 discloses a method for producing a halide solid electrolyte.

Citation List

Patent Literature

PTL 1: International Publication No. WO2018/025582

Summary of Invention

Technical Problem

It is an object of the present disclosure to provide a halide production method with high industrial productivity.

Solution to Problem

The production method of the present disclosure includes a heat treatment step of heat-treating a material mixture containing LiA, $YB_3$, $GdC_3$, and $CaD_2$ in an inert gas atmosphere. A, B, C, and D are each independently at least one selected from the group consisting of F, Cl, Br, and I. In the heat treatment step, the material mixture is heat-treated at higher than or equal to 200°C and lower than or equal to 700°C.

Advantageous Effects of Invention

The present disclosure provides a halide production method with high industrial productivity.

Brief Description of Drawings

[Fig. 1] Fig. 1 is a flowchart showing an example of a production method in a first embodiment.
[Fig. 2] Fig. 2 is a flowchart showing an example of the production method in the first embodiment.
[Fig. 3] Fig. 3 is a flowchart showing an example of the production method in the first embodiment.
[Fig. 4] Fig. 4 is a schematic illustration of a press forming die 200 used to evaluate the ionic conductivity of a solid electrolyte material.
[Fig. 5] Fig. 5 is a graph showing a Cole-Cole plot obtained by the measurement of the impedance of a solid electrolyte material in Example 1.

Description of Embodiment

An embodiment will next be described with reference to the drawings.

(First embodiment)

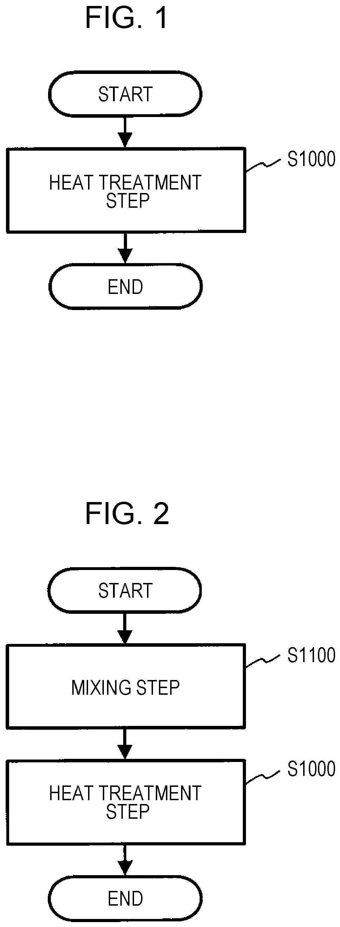

Fig. 1 is a flowchart showing an example of a production method in a first embodiment.
The production method in the first embodiment includes a heat treatment step S1000. In the heat treatment step S1000, a material mixture is heat-treated in an inert gas atmosphere.
The material mixture heat-treated in the heat treatment step S1000 contains LiA, $YB_3$, $GdC_3$, and $CaD_2$. A, B, C, and D are each independently at least one selected from the group consisting of F, Cl, Br, and I.
In the heat treatment step S1000, the material mixture is heat-treated at higher than or equal to 200°C and lower than or equal to 700°C. Here, the heat treatment temperature is an ambient temperature.

The production method in the first embodiment is a halide production method with high industrial productivity. The method with high industrial productivity is, for example, a method capable of mass production at low cost. Specifically, this production method allows a halide containing Li (i.e., lithium), Y (i.e., yttrium), Gd (i.e., gadolinium), and Ca (i.e., calcium) to be produced in a simple manner (i.e., by sintering in an inert gas atmosphere).

In the production method in the first embodiment, a vacuum sealed tube and a planetary ball mill may not be used.

In the heat treatment step S1000, for example, a powder of the material mixture may be placed in a container (e.g., a crucible) and heat-treated in a heating furnace. In this case, the material mixture heated to "higher than or equal to 200°C and lower than or equal to 700°C" in the inert gas atmosphere may be held for a prescribed time period or more. The heat treatment time period may be the length of time that does not cause a change in the composition of the heat-treated product due to volatilization of the halide etc. The length of time that does not cause a change in the composition of the heat-treated product means a heat treatment time period that does not cause deterioration of the ionic conductivity of the heat-treated product. With the production method in the first embodiment, a halide having, for example, an ionic conductivity higher than or equal to $1.2 \times 10^{-6}$ S/cm at around room temperature can be produced.

To produce a halide having higher ionic conductivity using the highly industrially productive method, the material mixture may be heat-treated in the heat treatment step S1000 at higher than or equal to 300°C and lower than or equal to 700°C. When the heat treatment temperature is higher than or equal to 300°C, the reaction of the material mixture can proceed sufficiently. Specifically, $LiA$, $YB_3$, $GdC_3$, and $CaD_2$ can be allowed to react sufficiently.

To produce a halide having higher ionic conductivity using the highly industrially productive method, the material mixture may be heat-treated in the heat treatment step S1000 at higher than or equal to 350°C. For example, the material mixture may be heat-treated at higher than or equal to 350°C and lower than or equal to 700°C. When the heat treatment temperature is higher than or equal to 350°C, the halide, which is the heat-treated product, has higher crystallinity. Therefore, the ionic conductivity of the halide that is the heat-treated product can be further increased. Specifically the halide solid electrolyte material obtained can have better quality.

To produce a halide having higher ionic conductivity using the highly industrially productive method, the material mixture may be heat-treated in the heat treatment step S1000 at higher than or equal to 400°C. For example, the material mixture may be heat-treated at higher than or equal to 400°C and lower than or equal to 700°C. When the heat treatment temperature is higher than or equal to 400°C, the halide, which is the heat-treated product, has higher crystallinity. Therefore, the ionic conductivity of the halide that is the heat-treated product can be further increased. Specifically, the halide solid electrolyte material obtained can have better quality.

To produce a halide having higher ionic conductivity using the highly industrially productive method, the material mixture may be heated in the heat treatment step S1000 at lower than or equal to 650°C. For example, the material mixture may be heat-treated at higher than or equal to 300°C and lower than or equal to 650°C, at higher than or equal to 350°C and lower than or equal to 650°C, or at higher than or equal to 400°C and lower than or equal to 650°C. When the heat treatment temperature is lower than or equal to 650°C, the halide formed by the solid phase reaction can be prevented from undergoing thermal decomposition. In this case, the ionic conductivity of the halide, which is the heat-treated product, can be increased. Specifically, the halide solid electrolyte material obtained has high quality.

To produce a halide having higher ionic conductivity using the highly industrially productive method, the material mixture may be heat-treated in the heat treatment step S1000 at lower than or equal to 550°C. For example, the material mixture may be heat-treated at higher than or equal to 300°C and lower than or equal to 550°C, at higher than or equal to 350°C and lower than or equal to 550°C, or at higher than or equal to 400°C and lower than or equal to 550°C. Specifically, the temperature lower than or equal to 550°C is a temperature lower than or equal to the melting point of LiBr. Therefore, when the heat treatment temperature is lower than or equal to 550°C, the decomposition of LiBr can be prevented. In this case, the ionic conductivity of the halide, which is the heat-treated product, can be further increased. Specifically, the halide solid electrolyte material obtained can have better quality.

To produce a halide having higher ionic conductivity using the highly industrially productive method, the material mixture may be heat-treated in the heat treatment step S1000 in more than or equal to 0.5 hours and less than or equal to 60 hours. When the heat treatment time period is more than or equal to 0.5 hours, the reaction of the material mixture can proceed sufficiently. Specifically, $LiA$, $YB_3$, $GdC_3$, and $CaD_2$ can be allowed to react sufficiently. When the heat treatment time period is less than or equal to 60 hours, the halide, which is the heat-treated product, can be prevented from volatilizing. Therefore, the halide obtained has the target composition. Specifically, a reduction in the ionic conductivity of the halide due to a change in the composition can be prevented. In other words, the halide solid electrolyte material obtained can have better quality.

To produce a halide having higher ionic conductivity using the highly industrially productive method, the material mixture may be heat-treated in the heat treatment step S1000 in less than or equal to 24 hours. For example, the material mixture may be heat-treated in more than or equal to 0.5 hours and less than or equal to 24 hours. When the heat treatment time period is less than or equal to 24 hours, the volatilization of the halide, which is the heat-treated product, can be further prevented. Therefore, the halide obtained has the target composition. Specifically, a reduction in the ionic conductivity of the halide due to a change in the composition can be prevented. In other words, the halide solid electrolyte material obtained can have better quality.

The inert gas atmosphere means, for example, an atmosphere in which the total concentration of gases other than the inert gas is lower than or equal to 1% by volume. Examples of the inert gas include helium, nitrogen, and argon.

After the heat treatment step S 1000, the heat-treated product may be pulverized. In this case, a pulverizing apparatus (such as a mortar or a mixer) may be used.

The material mixture may be a material prepared by mixing LiA, $YB_3$, $GdC_3$, and Alternatively, the material mixture may be a material containing LiA, $YB_3$, $GdC_3$, and $CaD_2$ and further containing mixed therein a material other than LiA, $YB_3$, $GdC_3$, and $CaD_2$.

To improve the characteristics of the halide, the material mixture may be a material further containing $M_\alpha X_\beta$ mixed therein. For example, to increase the ionic conductivity, the material mixture may be a material further containing $M_\alpha X_\beta$ mixed therein.

Here, M includes at least one selected from the group consisting of Na, K, Mg, Sr, Ba, Zn, In, Sn, Bi, La, Ce, Pr, Nd, Pm, Sm, Eu, Tb, Dy, Ho, Er, Tm, Yb, and Lu. X is at least one selected from the group consisting of F, Cl, Br, and I. $\alpha > 0$ and $\beta > 0$ are satisfied.

To improve the characteristics of the halide, $\alpha = 1$ and $2 \leq \beta < 5$ may be satisfied.

Part of metal cations in at least one selected from the group consisting of LiA, $YB_3$, $GdC_3$, and $CaD_2$ contained in the material mixture may be replaced with other metal cations. Specifically, part of Li, Y, Gd, and Ca may be replaced with M described above. In other words, the material mixture may further contain a compound containing LiA with part of Li replaced with other metal cations, a compound containing $YB_3$ with part of Y replaced with other metal cations, a compound containing $GdC_3$ with part of Gd replaced with other metal cations, or a compound containing $CaD_2$ with part of Ca replaced with other metal cations.

To further increase the ionic conductivity of the halide, A, B, C, and D may be each independently at least one selected from the group consisting of Cl and Br.

Specifically, the material mixture may be a material obtained by mixing "LiCl (i.e., lithium chloride) or LiBr (i.e., lithium bromide)," "$YCl_3$ (i.e., yttrium chloride) or $YBr_3$ (yttrium bromide)," "$GdCl_3$ (i.e., gadolinium chloride) or $GdBr_3$ (i.e., gadolinium bromide)," and "$CaCl_2$ (i.e., calcium chloride) or $CaBr_2$ (i.e., calcium bromide)."

Fig. 2 is a flowchart showing an example of the production method in the first embodiment.

As shown in Fig. 2, the production method in the first embodiment may further include a mixing step S1100. The mixing step S 1100 is performed before the heat treatment step S1000.

In the mixing step S 1100, LiA, $YB_3$, $GdC_3$, and $CaD_2$ used as raw materials are mixed. A material mixture is thereby obtained. Specifically, the material to be heat-treated in the heat treatment step S1000 is obtained.

To mix the raw materials, a well-known mixer (such as a mortar, a blender, or a ball mill) may be used.

For example, in the mixing step S1100, powders of the raw materials may be prepared and mixed. In this case, in the heat treatment step S1000, the material mixture in a powder form may be heat-treated. The powdery material mixture obtained in the mixing step S1100 may be formed into pellets. In the heat treatment step S1000, the material mixture in the form of pellets may be heat-treated.

In the mixing step S 1100, not only LiA, $YB_3$, $GdC_3$, and $CaD_2$ but also a raw material other than LiA, $YB_3$, $GdC_3$, and $CaD_2$ (for example, $M_\alpha X_\beta$ described above) may be mixed to obtain a material mixture.

In the mixing step S1100, "a raw material containing LiA as a main component," "a raw material containing $YB_3$ as a main component," "a raw material containing $GdC_3$ as a main component," and "a raw material containing $CaD_2$ as a main component" may be mixed to obtain a material mixture. The main component is a component whose molar ratio is highest.

In the mixing step S 1100, LiA, $YB_3$, $GdC_3$, and $CaD_2$ may be prepared such that the target composition is satisfied and then mixed.

For example, LiCl, LiBr, $YCl_3$, $GdCl_3$, and $CaBr_2$ may be mixed such that the molar ratio LiCl:LiBr:$YCl_3$:$GdCl_3$:$CaBr_2$ = 1:1.8:0.5:0.5:0.1. In this case, a halide having a composition represented by $Li_{2.8}Y_{0.5}Gd_{0.5}Br_2Cl_4$ is obtained.

The molar ratio of LiA, $YB_3$, $GdC_3$, and $CaD_2$ may be adjusted in advance so as to compensate for the change in the composition that may occur in the heat treatment step S1000.

In the mixing step S1100, not only LiA, $YB_3$, $GdC_3$, and $CaD_2$ but also MaClp or MaBrp may be mixed to obtain a material mixture. Specifically, a compound represented by $M_\alpha X_\beta$ in the first embodiment with X being Cl or Br may be further mixed to obtain the material mixture.

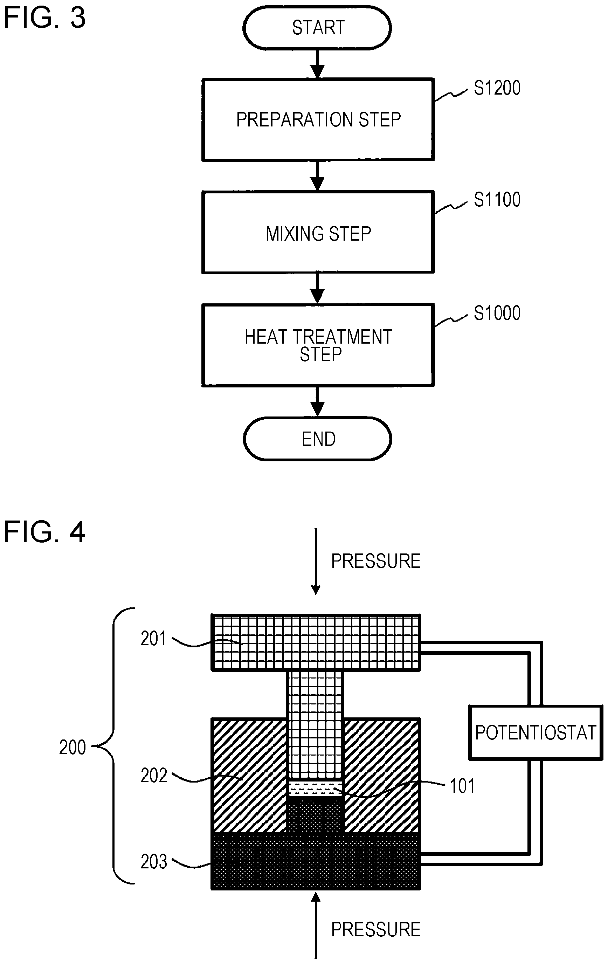

Fig. 3 is a flowchart showing an example of the production method in the first embodiment.

As shown in Fig. 3, the production method in the first embodiment may further include a preparation step S1200. The preparation step S1200 is performed before the mixing step S 1100.

In the preparation step S1200, raw materials such as LiA, $YB_3$, $GdC_3$, and $CaD_2$ are prepared. Specifically, the materials to be mixed in the mixing step S1100 are prepared.

In the preparation step S1200, raw materials such as LiA, $YB_3$, $GdC_3$, and $CaD_2$ may be synthesized. Alter-

natively, in the preparation step S1200, well-known commercial products (e.g., materials with a purity higher than or equal to 99%) may be used.

The materials prepared may be dried.

Examples of the form of each of the materials prepared include a crystalline form, a lump form, a flake form, and a powder form. In the preparation step S1200, crystalline, lump-like, or flake-like raw materials may be pulverized to obtain powdery raw materials.

To improve the characteristics (e.g., conductivity) of the halide, $M_\alpha X_\beta$ may be added in the preparation step S1200. Here, M is at least one selected from the group consisting of Na, K, Mg, Sr, Ba, Zn, In, Sn, Bi, La, Ce, Pr, Nd, Pm, Sm, Eu, Tb, Dy, Ho, Er, Tm, Yb, and Lu. X is at least one selected from the group consisting of Cl and Br. $\alpha = 1$ and $2 < \beta < 5$ are satisfied.

In the preparation step S1200, part of metal cations in at least one selected from the group consisting of LiA, $YB_3$, $GdC_3$, and $CaD_2$ (i.e., part of at least one selected from the group consisting of Li, Y, Gd, and Ca) may be replaced with other metal cations (e.g., M described above). Specifically, a compound containing LiA with part of Li replaced with other metal cations, a compound containing $YB_3$ with part of Y replaced with other metal cations, a compound containing $GdC_3$ with part of Gd replaced with other metal cations, or a compound containing $CaD_2$ with part of Ca replaced with other metal cations may be further prepared.

The halide produced by the production method of the present disclosure can be used as a solid electrolyte material. This solid electrolyte material is, for example, a solid electrolyte material having lithium ion conductivity. This solid electrolyte material is used, for example, for an all-solid-state lithium ion secondary battery.

EXAMPLES

The present disclosure will next be described in more detail with reference to Examples.

In the following Examples, halides produced by the production method of the present disclosure were evaluated as solid electrolyte materials.

<Example 1>

(Production of solid electrolyte material)

In an argon atmosphere with a dew point lower than or equal to -60°C and an oxygen concentration lower than or equal to 0.0001% by volume (this atmosphere is hereinafter referred to as a "dry argon atmosphere"), powders of LiCl, LiBr, $YCl_3$, $GdCl_3$, and $CaBr_2$ were prepared as raw material powders such that the molar ratio LiCl:Li-Br:$YCl_3$:$GdCl_3$:$CaBr_2$ was 1:1.8:0.5:0.5:0.1. These materials were pulverized in an agate mortar and mixed. The mixture obtained was placed in an alumina crucible and heat-treated in the dry argon atmosphere at 500°C for 0.5 hours. The heat-treated product obtained was pulverized in an agate mortar. A solid electrolyte material in Example 1 was thereby obtained.

(Evaluation of ionic conductivity)

Fig. 4 is a schematic illustration of a press forming die 200 used to evaluate the ionic conductivity of the solid electrolyte material.

The press forming die 200 includes an upper punch 201, a frame die 202, and a lower punch 203. The frame die 202 is formed of insulating polycarbonate. The upper punch 201 and the lower punch 203 are formed of electron conductive stainless steel.

The press forming die 200 shown in Fig. 4 was used to measure the impedance of the solid electrolyte material in Example 1 using the following method.

The solid electrolyte material powder in Example 1 was filled into the press forming die 200 in the dry argon atmosphere. The upper punch 201 and the lower punch 203 were used to apply a pressure of 300 MPa to the solid electrolyte material in Example 1 disposed inside the press forming die 200.

With the pressure applied, the upper punch 201 and the lower punch 203 were connected to a potentiostat (VersaSTAT 4, Princeton Applied Research) equipped with a frequency response analyzer. The upper punch 201 was connected to a working electrode and a potential measurement terminal. The lower punch 203 was connected to a counter electrode and a reference electrode. The impedance of the solid electrolyte material was measured at room temperature using an electrochemical impedance measurement method.

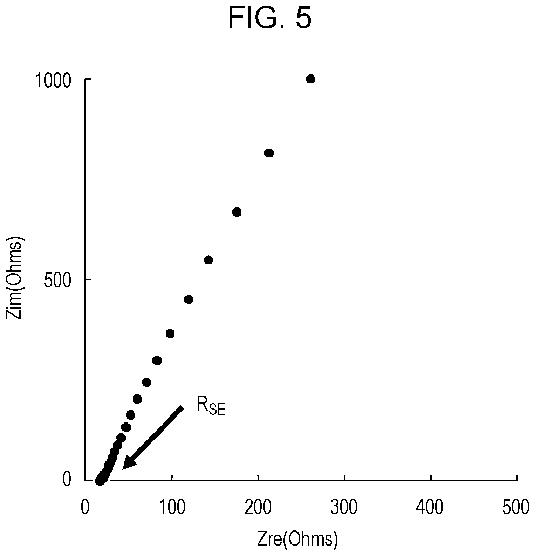

Fig. 5 is a graph showing a Cole-Cole plot obtained by the measurement of the impedance of the solid electrolyte material in Example 1.

In Fig. 5, the real value of the complex impedance at a measurement point at which the absolute value of the phase of the complex impedance was minimum was regarded as the ionic conduction resistance of the solid electrolyte material. See an arrow $R_{SE}$ shown in Fig. 5 for this real value. This resistance value was used to compute the ionic conductivity from the following formula (1).

$$\sigma = (R_{SE} \times S/t)^{-1} \quad (1)$$

Here, $\sigma$ represents the ionic conductivity. S represents the area of contact between the solid electrolyte material and the upper punch 201 (that is equal to the crosssectional area of a hollow portion of the frame die 202 in Fig. 4). $R_{SE}$ represents the resistance value of the solid electrolyte material in the impedance measurement, t represents the thickness of the solid electrolyte material (i.e., the thickness of a layer formed of the solid electrolyte material powder 101 in Fig. 4).

The ionic conductivity of the solid electrolyte material in Example 1 was $3.8 \times 10^{-3}$ S/cm as measured at 25°C.

<Examples 2 to 45>

(Production of solid electrolyte materials)

In Examples 2 to 21, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.8:0.5:0.5:0.1.

In Examples 22 and 23, LiCl, $YBr_3$, $GdCl_3$, and $CaBr_2$ were prepared in the dry argon atmosphere such that the molar ratio $LiCl:YBr_3:GdCl_3:CaBr_2$ was 2.2:0.6:0.6:0.1.

In Examples 24 and 25, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1.6:1.8:0.4:0.4:0.1.

In Example 26, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.9:0.5:0.5:0.05.

In Example 27, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.85:0.5:0.5:0.075.

In Example 28, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.75:0.5:0.5:0.125.

In Example 29, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.7:0.5:0.5:0.15.

In Example 30, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.6:0.5:0.5:0.2.

In Example 31, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.85:0.3:0.7:0.075.

In Example 32, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.85:0.45:0.55:0.075.

In Example 33, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1: 1.85:0.5:0.5:0.075.

In Example 34, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.85:0.55:0.45:0.075.

In Example 35, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.85:0.7:0.3:0.075.

In Example 36, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 1:1.85:0.9:0.1:0.075.

In Example 37, LiCl, LiBr, $YCl_3$, $GdCl_3$, and $CaBr_2$ were prepared in the dry argon atmosphere such that the molar ratio $LiCl:LiBr:YCl_3:GdCl_3:CaBr_2$ was 0.5:2.3:0.5:0.5:0.1.

In Example 38, LiBr, $YCl_3$, $GdCl_3$, and $CaBr_2$ were prepared in the dry argon atmosphere such that the molar ratio $LiBr:YCl_3:GdCl_3:CaBr_2$ was 2.8:0.5:0.5:0.1.

In Example 39, LiCl, LiBr, $YBr_3$, $GdCl_3$, and $CaBr_2$ were prepared in the dry argon atmosphere such that the molar ratio $LiCl:LiBr:YBr_3:GdCl_3:CaBr_2$ was 1:1.8:0.5:0.5:0.1.

In Example 40, LiCl, LiBr, $YBr_3$, $GdBr_3$, and $CaBr_2$ were prepared in the dry argon atmosphere such that the molar ratio $LiCl:LiBr:YBr_3:GdBr_3:CaBr_2$ was 2:0.8:0.6:0.4:0.1.

In Example 41, LiCl, $YBr_3$, $GdBr_3$, and $CaCl_2$ were prepared in the dry argon atmosphere such that the molar ratio $LiCl:YBr_3:GdBr_3:CaCl_2$ was 2.6:0.6:0.4:0.1.

In Example 42, LiCl, LiBr, $YCl_3$, $GdCl_3$, and $CaCl_2$ were prepared in the dry argon atmosphere such that the molar ratio $LiCl:LiBr:YCl_3:GdCl_3:CaCl_2$ was 0.5:2.3:0.6:0.4:0.1.

In Example 43, LiCl, LiBr, $YCl_3$, $GdCl_3$, and $CaCl_2$ were prepared in the dry argon atmosphere such that the molar ratio LiCl:LiBr:YCl$_3$:GdCl$_3$:CaCl$_2$ was 1:1.8:0.6:0.4:0.1.

In Example 44, LiCl, LiBr, YCl$_3$, GdCl$_3$, and CaCl$_2$ were prepared in the dry argon atmosphere such that the molar ratio LiCl:LiBr:YCl$_3$:GdCl$_3$:CaCl$_2$ was 1.3:0.5:0.6:0.4:0.1.

In Example 45, LiCl, LiBr, YCl$_3$, GdCl$_3$, and CaCl$_2$ were prepared in the dry argon atmosphere such that the molar ratio LiCl:LiBr:YCl$_3$:GdCl$_3$:CaCl$_2$ was 1.8:1:0.6:0.4:0.1.

Raw material powders prepared in the dry argon atmosphere were pulverized in an agate mortar and mixed. The powder mixture obtained was placed in an alumina crucible and heat-treated in the dry argon atmosphere. The heat treatment temperature and the heat treatment time period are shown in Table 1 or 2. Each of the heat-treated products obtained was pulverized in an agate mortar. Solid electrolyte materials in Examples 2 to 45 were thereby obtained.

(Evaluation of ionic conductivity)

The ionic conductivity of each of the solid electrolyte materials in Examples 2 to 45 was measured in the same manner as in Example 1. The measurement results are shown in Tables 1 and 2.

[Table 1]

| | Molar ratio of raw materials | | | | | | | | Composition | Heat treatment temperature (°C) | Heat treatment time period (hr) | Ionic conductivity (S/cm) |
|---|---|---|---|---|---|---|---|---|---|---|---|---|
| | LiCl | LiBr | YCl$_3$ | YBr$_3$ | GdCl$_3$ | GdBr$_3$ | CaCl$_2$ | CaBr$_2$ | | | | |
| Example 1 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 500 | 0.5 | $3.8 \times 10^{-3}$ |
| Example 2 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 500 | 1 | $4.3 \times 10^{-3}$ |
| Example 3 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 500 | 3 | $3.9 \times 10^{-3}$ |
| Example 4 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 500 | 10 | $2.8 \times 10^{-3}$ |
| Example 5 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 500 | 24 | $3.1 \times 10^{-3}$ |
| Example 6 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 500 | 60 | $1.4 \times 10^{-5}$ |
| Example 7 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 700 | 1 | $1.0 \times 10^{-3}$ |
| Example 8 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 650 | 1 | $1.9 \times 10^{-3}$ |
| Example 9 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 600 | 1 | $2.9 \times 10^{-3}$ |
| Example 10 | 1 | 1.8 | 0.5 | - | 0.5 | - | - | 0.1 | Li$_{2.8}$Ca$_{0.1}$Y$_{0.5}$Gd$_{0.5}$Br$_2$Cl$_4$ | 550 | 1 | $3.5 \times 10^{-3}$ |
| Example 11 | 1 | 1.8 | 0.5 | - | 0.5 | - | - | 0.1 | Li$_{2.8}$Ca$_{0.11}$Y$_{0.5}$Gd$_{0.5}$Br$_2$Cl$_4$ | 520 | 1 | $3.4 \times 10^{-3}$ |
| Example 12 | 1 | 1.8 | 0.5 | - | 0.5 | - | - | 0.1 | Li$_{2.8}$Ca$_{0.11}$Y$_{0.5}$Gd$_{0.5}$Br$_2$Cl$_4$ | 480 | 1 | $3.6 \times 10^{-3}$ |
| Example 13 | 1 | 1.8 | 0.5 | - | 0.5 | - | - | 0.1 | Li$_{2.8}$Ca$_{0.11}$Y$_{0.5}$Gd$_{0.5}$Br$_2$Cl$_4$ | 450 | 1 | $2.8 \times 10^{-3}$ |
| Example 14 | 1 | 1.8 | 0.5 | - | 0.5 | - | - | 0.1 | Li$_{2.8}$Ca$_{0.11}$Y$_{0.5}$Gd$_{0.5}$Br$_2$Cl$_4$ | 420 | 1 | $3.5 \times 10^{-3}$ |

(continued)

| | Molar ratio of raw materials | | | | | | | | Composition | Heat treatment temperature (°C) | Heat treatment time period (hr) | Ionic conductivity (S/cm) |
|---|---|---|---|---|---|---|---|---|---|---|---|---|
| | LiCl | LiBr | $YCl_3$ | $YBr_3$ | $GdCl_3$ | $GdBr_3$ | $CaCl_2$ | $CaBr_2$ | | | | |
| Example 15 | 1 | 1.8 | 0.5 | - | 0.5 | - | - | 0.1 | $Li_{2.8}Ca_{0.11}Y_{0.5}Gd_{0.5}Br_2Cl_4$ | 400 | 1 | $2.5 \times 10^{-3}$ |
| Example 16 | 1 | 1.8 | 0.5 | - | 0.5 | - | - | 0.1 | $Li_{2.8}Ca_{0.11}Y_{0.5}Gd_{0.5}Br_2Cl_4$ | 350 | 1 | $1.5 \times 10^{-4}$ |
| Example 17 | 1 | 1.8 | 0.5 | - | 0.5 | - | - | 0.1 | $Li_{2.8}Ca_{0.1}Y_{0.5}Gd_{0.5}Br_2Cl_4$ | 350 | 10 | $6.8 \times 10^{-4}$ |
| Example 18 | 1 | 1.8 | 0.5 | - | 0.5 | - | - | 0.1 | $Li_{2.8}Ca_{0.11}Y_{0.5}Gd_{0.5}Br_2Cl_4$ | 350 | 24 | $1.6 \times 10^{-3}$ |
| Example 19 | 1 | 1.8 | 0.5 | - | 0.5 | - | - | 0.1 | $Li_{2.8}Ca_{0.11}Y_{0.5}Gd_{0.5}Br_2Cl_4$ | 300 | 1 | $1.5 \times 10^{-5}$ |
| Example 20 | 1 | 1.8 | 0.5 | - | 0.5 | - | - | 0.1 | $Li_{2.8}Ca_{0.11}Y_{0.5}Gd_{0.5}Br_2Cl_4$ | 300 | 24 | $3.7 \times 10^{-4}$ |
| Example 21 | 1 | 1.8 | 0.5 | - | 0.5 | - | - | 0.1 | $Li_{2.8}Ca_{0.11}Y_{0.5}Gd_{0.5}Br_2Cl_4$ | 200 | 1 | $1.2 \times 10^{-6}$ |

[Table 2]

| | Molar ratio of raw materials | | | | | | | | Composition | Heat treatment temperature (°C) | Heat treatment time period (hr) | Ionic conductivity (S/cm) |
|---|---|---|---|---|---|---|---|---|---|---|---|---|
| | LiCl | LiBr | YCl$_3$ | YBr$_3$ | GdCl$_3$ | GdBr$_3$ | CaCl$_2$ | CaBr$_2$ | | | | |
| Example 22 | 2.2 | - | - | 0.6 | 0.6 | - | - | 0.1 | Li$_{2.2}$Ca$_{0.1}$(Y$_{0.5}$Gd$_{0.5}$)$_{1.2}$Br$_2$Cl$_4$ | 500 | 1 | 1.2×10$^{-3}$ |
| Example 23 | 2.2 | - | - | 0.6 | 0.6 | - | - | 0.1 | Li$_{2.2}$Ca$_{0.1}$(Y$_{0.5}$Gd$_{0.5}$)$_{1.2}$Br$_2$Cl$_4$ | 400 | 1 | 1.1×10$^{-3}$ |
| Example 24 | 1.6 | 1.8 | 0.4 | - | 0.4 | - | - | 0.1 | Li$_{3.4}$Ca$_{0.1}$(Y$_{0.5}$Gd$_{0.5}$)$_{0.8}$Br$_2$Cl$_4$ | 500 | 1 | 1.4×10$^{-3}$ |
| Example 25 | 1.6 | 1.8 | 0.4 | - | 0.4 | - | - | 0.1 | Li$_{3.4}$Ca$_{0.1}$(Y$_{0.5}$Gd$_{0.5}$)$_{0.8}$Br$_2$Cl$_4$ | 400 | 1 | 7.8×10$^{-4}$ |
| Example 26 | 1 | 1.9 | 0.5 | - | 0.5 | - | - | 0.05 | Li$_{2.9}$Ca$_{0.05}$Y$_{0.5}$Gd$_{0.5}$Br$_2$Cl$_4$ | 500 | 1 | 3.9×10$^{-3}$ |
| Example 27 | 1 | 1.85 | 0.5 | - | 0.5 | - | - | 0.075 | Li$_{2.85}$Ca$_{0.075}$Y$_{0.5}$Gd$_{0.5}$Br$_2$Cl$_4$ | 500 | 1 | 4.4×10$^{-3}$ |
| Example 28 | 1 | 1.75 | 0.5 | - | 0.5 | - | - | 0.125 | Li$_{2.75}$Ca$_{0.125}$Y$_{0.5}$Gd$_{0.5}$Br$_2$Cl$_4$ | 500 | 1 | 3.3×10$^{-3}$ |
| Example 29 | 1 | 1.7 | 0.5 | - | 0.5 | - | - | 0.15 | Li$_{2.7}$Ca$_{0.15}$Y$_{0.5}$Gd$_{0.5}$Br$_2$Cl$_4$ | 500 | 1 | 3.2×10$^{-3}$ |
| Example 30 | 1 | 1.6 | 0.5 | - | 0.5 | - | - | 0.2 | Li$_{2.6}$Ca$_{0.2}$Y$_{0.5}$Gd$_{0.5}$Br$_2$Cl$_4$ | 500 | 1 | 2.5×10$^{-3}$ |
| Example 31 | 1 | 1.85 | 0.3 | - | 0.7 | - | - | 0.075 | Li$_{2.85}$Ca$_{0.075}$Y$_{0.3}$Gd$_{0.7}$Br$_2$Cl$_4$ | 500 | 1 | 3.2×10$^{-3}$ |
| Example 32 | 1 | 1.85 | 0.45 | - | 0.55 | - | - | 0.075 | Li$_{2.85}$Ca$_{0.075}$Y$_{0.45}$Gd$_{0.55}$Br$_2$Cl$_4$ | 500 | 1 | 3.9×10$^{-3}$ |
| Example 33 | 1 | 1.85 | 0.5 | - | 0.5 | - | - | 0.075 | Li$_{2.85}$Ca$_{0.075}$Y$_{0.5}$Gd$_{0.5}$Br$_2$Cl$_4$ | 500 | 1 | 4.4×10$^{-3}$ |

EP 4 129 916 A1

(continued)

| | Molar ratio of raw materials | | | | | | | | Composition | Heat treatment temperature (°C) | Heat treatment time period (hr) | Ionic conductivity (S/cm) |
|---|---|---|---|---|---|---|---|---|---|---|---|---|
| | LiCl | LiBr | $YCl_3$ | $YBr_3$ | $GdCl_3$ | $GdBr_3$ | $CaCl_2$ | $CaBr_2$ | | | | |
| Example 34 | 1 | 1.85 | 0.55 | - | 0.45 | - | - | 0.075 | $Li_{2.85}Ca_{0.075}Y_{0.55}Gd_{0.45}Br_2Cl_4$ | 500 | 1 | $4.5 \times 10^{-3}$ |
| Example 35 | 1 | 1.85 | 0.7 | - | 0.3 | - | - | 0.075 | $Li_{2.85}Ca_{0.075}Y_{0.7}Gd_{0.3}Br_2Cl_4$ | 500 | 1 | $3.7 \times 10^{-3}$ |
| Example 36 | 1 | 1.85 | 0.9 | - | 0.1 | - | - | 0.075 | $Li_{2.85}Ca_{0.075}Y_{0.9}Gd_{0.1}Br_2Cl_4$ | 500 | 1 | $2.7 \times 10^{-3}$ |
| Example 37 | 0.5 | 2.3 | 0.5 | - | 0.5 | - | - | 0.1 | $Li_{2.8}Ca_{0.1}Y_{0.5}Gd_{0.5}Br_{2.5}Cl_{3.5}$ | 500 | 1 | $3.8 \times 10^{-3}$ |
| Example 38 | - | 2.8 | 0.5 | - | 0.5 | - | - | 0.1 | $Li_{2.8}Ca_{0.1}Y_{0.5}Gd_{0.5}Br_3Cl_3$ | 500 | 1 | $2.9 \times 10^{-3}$ |
| Example 39 | 1 | 1.8 | - | 0.5 | 0.5 | < | < | 0.1 | $Li_{2.8}Ca_{0.1}Y_{0.5}Gd_{0.5}Br_{3.5}Cl_{2.5}$ | 500 | 1 | $2.2 \times 10^{-3}$ |
| Example 40 | 2 | 0.8 | - | 0.6 | - | 0.4 | - | 0.1 | $Li_{2.8}Ca_{0.1}Y_{0.6}Gd_{0.4}Br_4Cl_2$ | 500 | 1 | $1.6 \times 10^{-3}$ |
| Example 41 | 2.6 | - | - | 0.6 | - | 0.4 | 0.1 | - | $Li_{2.8}Ca_{0.1}Y_{0.6}Gd_{0.4}Br_3Cl_3$ | 500 | 1 | $2.5 \times 10^{-3}$ |
| Example 42 | 0.5 | 2.3 | 0.6 | - | 0.4 | - | 0.1 | - | $Li_{2.8}Ca_{0.1}Y_{0.6}Gd_{0.4}Br_{2.5}Cl_{3.5}$ | 500 | 1 | $3.3 \times 10^{-3}$ |
| Example 43 | 1 | 1.8 | 0.6 | - | 0.4 | - | 0.1 | - | $Li_{2.8}Ca_{0.1}Y_{0.6}Gd_{0.4}Br_2Cl_4$ | 500 | 1 | $4.7 \times 10^{-3}$ |
| Example 44 | 1.3 | 0.5 | 0.6 | - | 0.4 | - | 0.1 | - | $Li_{2.8}Ca_{0.1}Y_{0.6}Gd_{0.4}Br_{1.5}Cl_{4.5}$ | 500 | 1 | $1.9 \times 10^{-3}$ |
| Example 45 | 1.8 | 1 | 0.6 | - | 0.4 | - | 0.1 | - | $Li_{2.8}Ca_{0.1}Y_{0.6}Gd_{0.4}BrCl_5$ | 500 | 1 | $9.3 \times 10^{-4}$ |

EP 4 129 916 A1

<Discussion>

As can be seen from Examples 1 to 45, when the heat treatment temperature is higher than or equal to 200°C and lower than or equal to 700°C, the halide obtained has a high ionic conductivity higher than or equal to $1.2 \times 10^{-6}$ S/cm at room temperature. This indicates that the solid electrolyte materials in Examples 1 to 45 have high crystallinity.

As can be seen by comparing Example 21 with Examples 2, 7 to 16, and 19, when the heat treatment temperature is higher than or equal to 300°C and lower than or equal to 700°C, the ionic conductivity of the solid electrolyte material is higher. As can be seen by comparing Examples 7 and 16 with Examples 2 and 8 to 15, when the heat treatment temperature is higher than or equal to 400°C and lower than or equal to 650°C, the ionic conductivity of the solid electrolyte material is still higher. As can be seen by comparing Examples 8 and 15 with Examples 2 and 9 to 14, when the heat treatment temperature is higher than or equal to 420°C and lower than and equal to 600°C, the ionic conductivity of the solid electrolyte material is still higher. When the heat treatment is performed at any of the above heat treatment temperatures, the solid electrolyte material can have high crystallinity, and a change in composition due to thermal decomposition at high temperature may be prevented.

As can be seen by comparing Examples 1 to 3 with Examples 4 to 6, when the heat treatment time period is more than or equal to 0.5 hours and less than or equal to 3 hours, the ionic conductivity of the solid electrolyte material is higher.

As described above, the solid electrolyte materials produced by the production method of the present disclosure have high lithium ion conductivity. Moreover, the production method of the present disclosure is a simple method and is a method with high industrial productivity.

Industrial Applicability

The production method of the present disclosure is used, for example, as a method for producing a solid electrolyte material. The solid electrolyte material produced by the production method of the present disclosure is used, for example, for an all-solid-state lithium ion secondary battery.

Reference Signs List

101    solid electrolyte material powder

200    press forming die

201    upper punch

202    frame die

203    lower punch

**Claims**

1.   A method for producing a halide, the method comprising:

a heat treatment step of heat-treating a material mixture containing LiA, YB$_3$, GdC$_3$, and CaD$_2$ in an inert gas atmosphere,
wherein A, B, C, and D are each independently at least one selected from the group consisting of F, Cl, Br, and I, and
wherein, in the heat treatment step, the material mixture is heat-treated at higher than or equal to 200°C and lower than or equal to 700°C.

2.   The method for producing according to claim 1, wherein, in the heat treatment step, the material mixture is heat-treated at higher than or equal to 300°C.

3.   The method for producing according to claim 2, wherein, in the heat treatment step, the material mixture is heat-treated at higher than or equal to 350°C.

4. The method for producing according to claim 3, wherein, in the heat treatment step, the material mixture is heat-treated at higher than or equal to 400°C.

5. The method for producing according to any one of claims 1 to 4, wherein, in the heat treatment step, the material mixture is heat-treated at lower than or equal to 650°C.

6. The method for producing according to claim 5, wherein, in the heat treatment step, the material mixture is heat-treated at lower than or equal to 550°C.

7. The method for producing according to any one of claims 1 to 6, wherein, in the heat treatment step, the material mixture is heat-treated in more than or equal to 0.5 hours and less than or equal to 60 hours.

8. The method for producing according to claim 7, wherein, in the heat treatment step, the material mixture is heat-treated in less than or equal to 24 hours.

9. The method for producing according to any one of claims 1 to 8, wherein A, B, C, and D are each independently at least one selected from the group consisting of Cl and Br.

## FIG. 1

START

HEAT TREATMENT STEP — S1000

END

## FIG. 2

START

MIXING STEP — S1100

HEAT TREATMENT STEP — S1000

END

FIG. 3

FIG. 4

FIG. 5

## INTERNATIONAL SEARCH REPORT

| International application No. |
| --- |
| PCT/JP2021/002509 |

### A. CLASSIFICATION OF SUBJECT MATTER
Int. Cl. C01F17/36(2020.01)i, H01B1/06(2006.01)i, H01M10/0562(2010.01)i
FI: C01F17/36, H01B1/06 A, H01M10/0562

According to International Patent Classification (IPC) or to both national classification and IPC

### B. FIELDS SEARCHED

Minimum documentation searched (classification system followed by classification symbols)
Int. Cl. C01F17/36, H01B1/06, H01M10/0562

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)
JSTPlus/JST7580/JSTChina (JDreamIII); CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2019/135344 A1 (PANASONIC INTELLECTUAL PROPERTY MANAGEMENT CO., LTD.) 11 July 2019, paragraphs [0012], [0031]-[0034], [0116], table 1, examples 13-15, 17-21 | 1-9 |
| Y | WO 2019/135328 A1 (PANASONIC INTELLECTUAL PROPERTY MANAGEMENT CO., LTD.) 11 July 2019, paragraphs [0009]-[0044], [0051] | 1-9 |
| A | WO 2019/146219 A1 (PANASONIC INTELLECTUAL PROPERTY MANAGEMENT CO., LTD.) 01 August 2019, entire text, all drawings | 1-9 |

☐ Further documents are listed in the continuation of Box C.          ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12.03.2021 | 23.03.2021 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/002509

| Patent Documents referred to in the Report | Publication Date | Patent Family | Publication Date |
|---|---|---|---|
| WO 2019/135344 A1 | 11.07.2019 | CN 111295789 A | |
| WO 2019/135328 A1 | 11.07.2019 | CN 111295789 A | |
| WO 2019/146219 A1 | 01.08.2019 | CN 111295789 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018025582 A